# EUROPEAN PATENT SPECIFICATION

(11) **EP 2 677 894 B1**
(45) Date of publication and mention of the grant of the patent: **22.04.2020**
(21) Application number: 11862224.0
(22) Date of filing: 10.01.2012
(51) Int. Cl.: A45D 34/00, A45D 34/04, B65D 53/00, A45D 40/26

(54) **FLUID RESERVOIR ASSEMBLY INCLUDING ANTECHAMBER AND ADJUSTABLE WIPING FEATURE**
FLÜSSIGKEITSBEHÄLTERANORDNUNG MIT VORKAMMER UND EINSTELLBARER WISCHFUNKTION
ENSEMBLE RÉSERVOIR DE FLUIDE COMPRENANT UNE ANTICHAMBRE

(30) Priority: 22.02.2011 US 201161445087 P
(43) Date of publication of application: 01.01.2014
(73) Proprietor: Group One Limited, Ramsey, Isle of Man IM8 1GB (GB)
(72) Inventor: GOLDSTEIN, Fredric, 131 41 Nacka (SE); BARTO, JR., Robert Murray, Palm Beach Gardens, Florida 33418-4007 (US)
(74) Representative: Hutchinson, Thomas Owen
(86) International application number: PCT/US2011/063442
(87) International publication number: WO 2012/134554

(56) References cited:
- JP-U- H0 218 316
- US-A- 5 765 574
- US-A- 5 875 791
- US-A1- 2001 038 769
- US-A1- 2009 052 969
- US-A1- 2009 133 708
- US-B2- 7 578 071

## Description

This disclosure relates to relates to a fluid reservoir assembly. Certain types of fluid reservoir assemblies, particularly cosmetics bottles, house mascara and other like fluids, and include an applicator brush. These bottles may include a seal, or wiper, arranged to protect the fluid stored within the bottle from air, thereby preventing outside air from drying the fluid. Some bottles further allow a user to adjust a seal to control the amount of fluid carried out of the bottle by the brush. Known fluid containers comprising seals are disclosed in, for example, published US patent application numbers: US 2001/038769 [GUERET JEAN-LOUIS; 8 November 2001]; US 2009/052969 [GUERET JEAN-LOUIS; 26 February 2009]; and US 5 875 791 A [SHEFFLER ROBERT ET AL; 2 March 1999]. Another fluid container is known from JP H062607 Y2.

A fluid reservoir assembly according to the invention is set forth in the appended claims.

The disclosed fluid reservoir assembly may be a cosmetic bottle assembly. The bottle assembly may include an applicator having a brush. In order to remove fluid from the reservoir, the brush passes through an antechamber between two spaced apart seals. An additional feature allows for selective adjustment of the level of wiping performed by at least one of the seals to control the amount of fluid carried by the brush as it exits the reservoir.

The disclosed fluid reservoir assembly may thus provide adjustable fluid wiping, while still substantially preventing the fluid in the reservoir from drying (i.e., thereby substantially maintaining the original factory viscosity level of the fluid).

The drawings that accompany the detailed description can be briefly described as follows:
Figure 1 is a sectional view of another disclosed fluid reservoir assembly.
Figure 2A is sectional view of the fluid reservoir assembly of Figure 1 showing the tapered section in a non-blocking position, and showing the lower seal in a neutral position.
Figure 2B is sectional view of the fluid reservoir assembly of Figure 1 showing the lower seal in a fully unblocked state, with the brush passing upwardly through the lower seal.
Figure 3A is a sectional view of the fluid reservoir assembly of Figure 1 showing the tapered section in a blocking position, with the brush positioned below the lower seal.
Figure 3B is a sectional view of the fluid reservoir assembly of Figure 1 showing the lower seal in a fully blocked state, with the brush passing upwardly through the lower seal.
Figure 4 is representative of the deflection experienced by the seals present in the fluid reservoir assembly of Figure 1.
Figure 5A is a top view of a seal that may be included in the fluid reservoir assembly of Figure 1.
Figure 5B is a side view of the seal in Figure 5A in a downward position.
Figure 5C is a top view of the seal in Figure 5A in a downward position.
Figure 6 is a top view of another seal that may be included in the fluid reservoir assembly of Figure 1.
Figure 7 is a bottom view of the lower seal that may be included in the fluid reservoir assembly of Figure 1, including a juxtaposed view of the tapered section.
Figure 8 is representative of another disclosed fluid reservoir assembly.
Figure 9 is representative of another embodiment of the disclosed fluid reservoir assembly, including an antechamber and excluding the blocking feature.
Figure 10 is representative of yet another embodiment of the fluid reservoir assembly, including a single seal, said embodiment does not fall under the scope of the present invention.

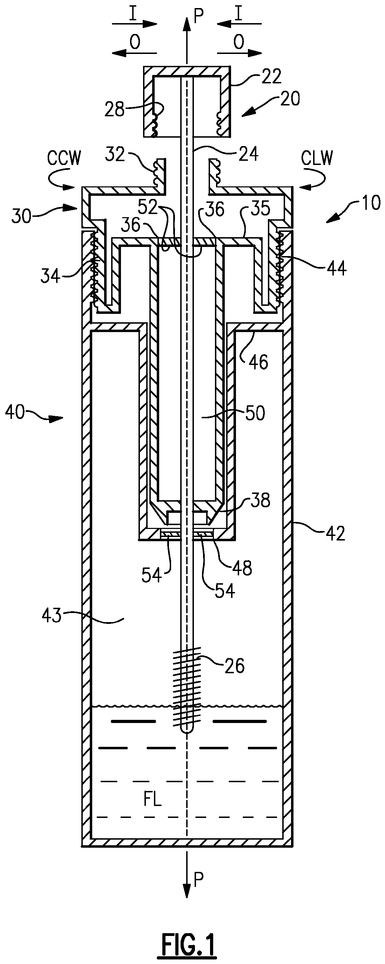

Figure 1 is a sectional view of an example disclosing a assembly 10, or a fluid reservoir assembly. The bottle assembly 10 is generally cylindrical, and is shown sectioned along its central axis, which in this case coincides with the path P. Of course, the bottle assembly 10 need not be limited only to cylindrical bottles. The shown bottle assembly 10 includes an applicator assembly 20, an upper housing section 30, and a lower housing section 40.
The applicator assembly 20 includes a cap 22 with a stick 24, or stem, extending downwardly therefrom. At an end opposite the cap 22, the stick 24 includes a brush 26, or other generic applicator. The brush 26 may include bristles adapted to carry fluid FL, which may be mascara, from the bottle assembly 10 and to apply the fluid FL onto a user's eyelashes, for example. As is generally shown, the applicator assembly 20 is generally movable along the path P. The cap 22 also may include threads 28 to engage with a first set of threads 32 of the upper housing section 30, thereby allowing a user to essentially close and seal the top of the bottle assembly 10. Notably, it is not necessary for the cap 22 to be threaded onto the upper housing section 30, and the cap 22 could be connected to the upper housing section 30 in another manner.

The upper housing section 30 is rotatable relative the lower housing section 40 in both clockwise and counter-clockwise directions CLW, CCW via a second set of threads 34 engageable with threads 44 of the lower housing section 40. Tabs or other features may be provided to increase the ease by which a user can rotate the upper housing section 30. The upper housing section 30 further includes an inwardly projecting flange 35 supporting an upper seal 52 (or upper membrane 52) around the path P. A lower portion of the upper housing section 30 includes a tapered section 38, here a frustoconical shape, which may block deflection of a lower seal 54 (or lower membrane 52). The tapered section 38 is provided proximate the lower seal 54 and below the inwardly projecting flange 35. As explained in detail below, rotation of the upper housing section 30 relative to the lower housing section 40 moves the tapered section 38 along the path P relative to the lower seal 54. This will determine the degree in which tapered section 38 will act to block deflection of lower seal 54. While it may be preferred that the tapered section 38 be tapered, the tapered section 38 may alternatively not be tapered, and may instead include a shouldered inner diameter.

The lower housing section 40 is generally defined by a main body portion 42 in which a reservoir 43, which retains fluid FL, is defined. The reservoir 43 here is shown as being constrained by both the main body portion 42 and the lower seal 54. As shown, the main body portion 42 includes an inwardly projecting flange 46 that supports the lower seal 54 around the path P by way of a lower support structure 48. An appropriate size for the reservoir 43, may be selected, as appropriate. For example, a relatively small reservoir 43 would decrease the amount of air within the reservoir 43 as well as concentrate the fluid FL close to the brush 26. By concentrating the fluid FL in this manner, the fluid FL would be substantially prevented from spreading within the reservoir 43, and thus further evaporation and drying may be avoided.

An antechamber 50 is defined between the upper seal 52 and the lower seal 54 (e.g., the "space" or "buffer" of air between the upper and lower seals 52, 54). In one example, when traveling along the path P, the brush 26 only passes through one of the upper and lower seals 52, 54 at a time. That is, if the brush 26 is positioned in the reservoir 43 and extracted outward (or, removed), the brush 26 would completely pass through the lower seal 54 before contacting the upper seal 52. Likewise, when inserting the brush 26 into the bottle assembly 10, the lower seal 54 would remain closed while the brush penetrates (or, initially breaches or contacts) the upper seal 52. In this manner, the brush 26 may separately pass through the seals 52, 54 to substantially prevent unwanted air from entering the fluid reservoir 43 by virtue of the upper and lower seals 52, 54 and the buffer of air in the antechamber 50. Preferably, there should be adequate spacing between the upper and lower seals 52, 54 in order to fully provide for this functionality (e.g., to create an adequate antechamber 50). However, the seals 52, 54 may be spaced so that the brush 26 simultaneously contacts the seals 52, 54 when passing through the antechamber 50. Further, and as explained in detail below, the seals 52, 54 are configured to tightly wrap around the stick 24 and the brush 26 so that air is substantially prevented from entering the reservoir 43. It may also be important to prevent air within the reservoir 43 from exiting the reservoir, and to hinder the exchange of inside and outside air. Loss of this inside air, which may be saturated, would not be desirable as it would lead to a loss of moisture content resulting in drying of the fluid FL.

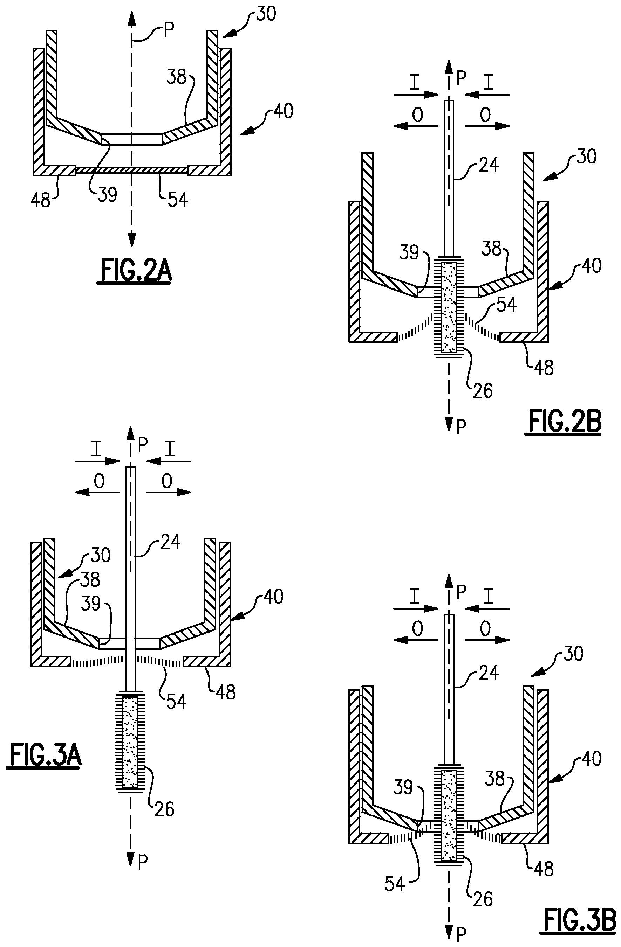

Referring now to Figures 2A-3B, a blocking feature, allowing for adjustable wiping of the brush 26, is described. Figure 2A shows the tapered section 88 in a non-blocking position (or, a first position) where deflection of the lower seal 54 will not cause the lower seal 54 to engage the tapered section 38. As shown, the brush 26 is removed, and the lower seal 54 is in a neutral, or relaxed, position.

Figure 2B shows the brush 26 passing through the lower seal 54, wherein the lower seal 54 is in fully unblocked state. That is, because the tapered section 38 is in a non-blocking position, the lower seal 54 is not in engagement with or, is not in substantial engagement with the tapered section 38. In this unblocked state, the lower seal 54 is permitted to fully deflect away from the path P (e.g., in a generally radially outward direction O) as dictated by the force imparted to the lower seal 54 by the extraction of the brush 26. Because the lower seal 54 can deflect away from the path P in this manner, the lower seal 54 wipes a relatively small amount of fluid FL from the brush 26.

In Figure 3A, the tapered section 38 is shown in a blocking position (or, a second position) wherein the tapered section 38 will block deflection of the lower seal 54 as the brush 26 is pulled along path P to exit the bottle. In the blocking position, the tapered section 38 is lowered along the path P by rotation of the upper housing section 30 in the clockwise direction CLW, for example. That is, the tapered section 38 is positioned closer to the lower seal 54 than when the tapered section 38 is the non-blocking position (or, first position).

In Figure 3B, the brush 26 is shown passing through the lower seal 54 with the tapered section 38 in the blocking position. The lower seal 54 is shown in a fully blocked state wherein the tapered section 38 restricts movement of the lower seal 54 in the radially outward direction O away from the path P. Specifically, extraction of the brush 26 causes the lower seal 54 to deflect obtusely away from the path P in the radially outward direction O, however the deflection of the lower seal 54 is limited by the tapered section 38. That is, the lower seal 54 is prevented from opening beyond the diameter of the inner surface 39, which is a diameter relatively close to the size of the brush 26. While the diameter of the inner surface 39 is set at its manufacture, one may determine the diameter of the inner surface 39 depending on a desired amount of wiping to be performed by the lower seal 54 (e.g., when the diameter of the inner surface 39 is closer to the size of the brush 26, the amount of wiping performed by the lower seal 54 will increase). In particular, the inner surface 39 of the tapered section 38 urges the lower seal 54 in a radially inward direction I toward the path P against the deflection caused by the extraction of the brush 26. A relatively large amount of fluid FL is thus wiped from the brush 26 by the lower seal 54 relative to when the tapered section 38 is in the non-blocking position of Figures 2A-2B, for example. In this way, a user may selectively adjust the amount of fluid FL to be wiped from the brush 26 during extraction (e.g., the level of wiping performed by the lower seal 54 may be adjusted) simply by rotating the upper housing section 30.

Notably, because the upper seal 52 is not blocked in the same manner as the lower seal 54, the amount of fluid FL remaining on the brush after being wiped by the lower seal 854 remains substantially unchanged by any wiping of the brush 26 performed by the upper seal 52. While the upper seal 52 may cause minimal wiping of the brush, this wiping will tend to distribute the fluid FL evenly along the length of the brush 26, thus avoiding clumping of the fluid FL, as is typical of mascara, for example. By providing the tapered section 38 along with the ability to block the lower seal 54, a user is allowed to accurately select a desired amount of fluid FL to be carried out of the bottle assembly 10 by the brush 26, while still preventing outside air from entering the reservoir 43.

It should be noted that it is possible to provide an antechamber wherein an upper seal is blocked (similar to the manner in which the lower seal 54 is blocked) and a lower seal is unblocked (similar to the manner in which the upper seal 52 is unblocked). Such an arrangement is within the scope of this disclosure. However, it may be preferred to perform wiping with a lower seal 54, as fluid FL removed by the lower seal 54 would tend to remain in the fluid reservoir 43, whereas substantial wiping of fluid FL with the upper seal 52 would tend to cause an unwanted build-up of fluid FL within the antechamber 50.

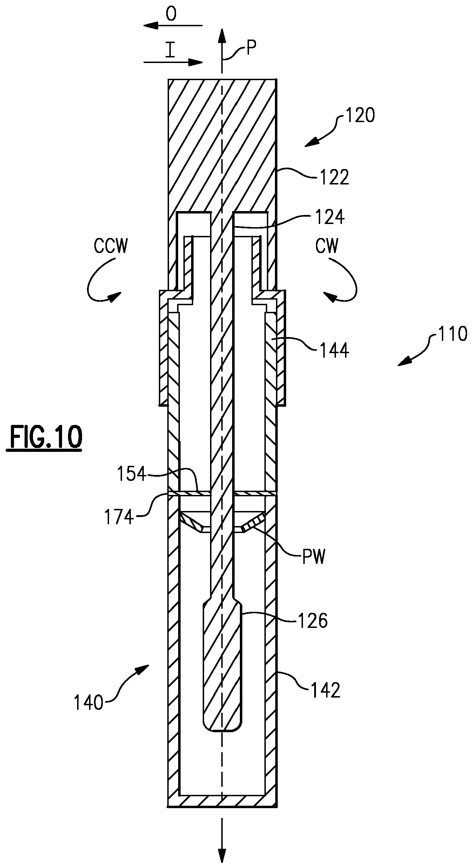

Further, a pre-wiper PW may be positioned below the lower seal 54, above the upper seal 52, or both. The pre-wiper PW may be a plastic insert incorporated into the bottle assembly 10 having a simple opening/aperture of similar diameter to the applicator 26, and can be arranged about the path P. In the example that a pre-wiper PW is positioned below the lower seal 54 (as schematically illustrated in Figure 10), the pre-wiper PW would remove excess fluid FL from the applicator 26 to essentially reduce the amount of wiping to be performed by the lower seal 52, as well as reducing the potential for fluid FL to build up in the antechamber 50. In the example of Figure 10, the pre-wiper PW is angled downwardly at roughly 45 degrees to increase a wiping effect and to allow excess fluid to essentially drain back into the reservoir without being trapped, or caught, above the pre-wiper. Again, it should be understood that the pre-wiper of Figure 10 is illustrative of one example, and pre- wipers can be incorporated into the disclosed bottle assembly 10 as desired.

While Figures 2A-3B represent blocking and non-blocking positions of the tapered section 38, intermediate positions, providing varying levels of wiping of the fluid FL carried by the brush 26, may further be included. For example, the upper housing section 30 may be rotated to move the tapered section 38 to one or more intermediate blocking positions between the shown blocking and non-blocking positions. These intermediate blocking positions may provide for a level of wiping that is greater than when the lower seal 54 is in the fully unblocked state (e.g., Figure 2B), and less than when the lower seal 54 is in the fully blocked state (e.g., Figure 3B). In this sense, the shown blocked and unblocked states may represent the highest and lowest levels of wiping to be performed by the lower seal 54, respectively. Further, the upper housing section 30 and the lower housing section 40 may include markings, as appropriate, so that a user can select a desired level of wiping. Pitch of the threads 34, 44, as well as the shape of the tapered section 38, may affect the relationship between rotation of the housing section 30 and the amount of fluid FL wiped from the brush 26 by the lower seal 54. As one would appreciate, as the tapered section 38 moves (axially) closer to the lower seal 54, amount of wiping performed lower seal 54 will increase.

Furthermore, while not shown in the Figures, the tapered section 38 could include an adjustable, or expandable, aperture. In this case, the tapered section 38 would be axially fixed relative to the lower seal 54, and the end of the tapered section 38 would include an adjustable aperture, such that the diameter of the adjustable aperture may change to provide varying levels of blocking of the lower seal 54. The adjustable aperture may be selectively adjustable by a user, without requiring axial movement of the entire tapered section 38.

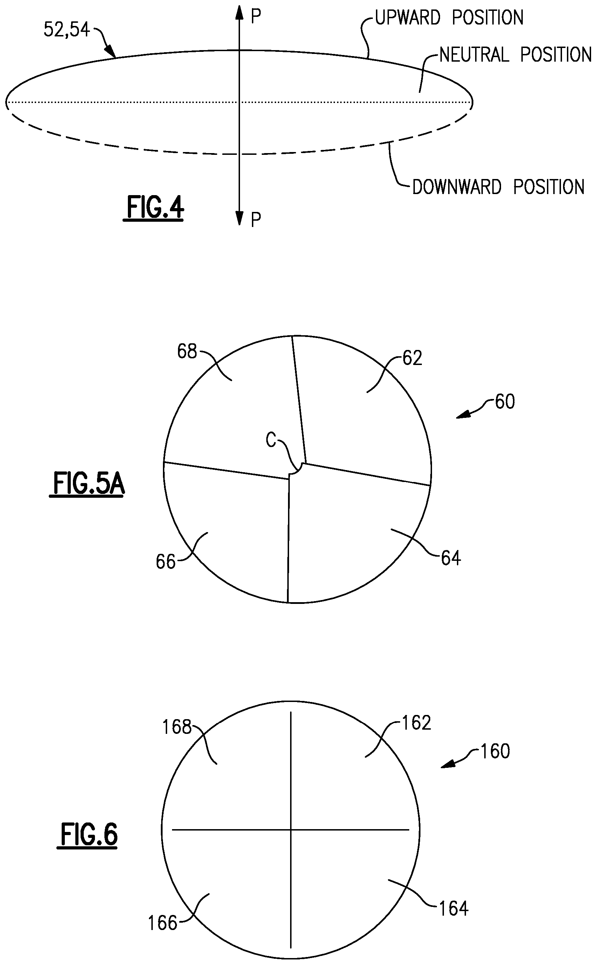

Turning now to Figure 4, different deflections that may be experienced by the seals 52, 54 when in contact with the brush 26 are represented. For example, the seals 52, 54 would generally be deflected to the shown upward position when the brush 26 is extracted from the reservoir 43 along the path P (e.g., the lower seal 54, as shown in Figures 2B and 3B). When neither the brush 26 nor the stick 24 is in engagement with the seals 52, 54, the seals 52, 54 will generally return to a neutral, or relaxed, position under the resiliency of the seal (e.g., the lower seal 54, as shown in Figure 2A). Notably, while the seal is shown generally flat in the neutral position, the seal could generally bow upwardly when in the neutral position. The seals 52, 54 may be any number of resilient materials, such as silicone rubber, and the seals 52, 54 may thus be naturally biased to the neutral position (i.e., the seals 52, 54 have a memory). Of course, the amount of wiping performed by the seals 52, 54 will depend on the flexibility (and other properties) of the material selected for the seals 52, 54. Further, when inserting the brush 26 into the reservoir 43, for example, the seals 52, 54 may be generally deflected to the shown downward position. Of course, the terms "upward" and "downward" are relative to the normal, or upright, positioning of the bottle.

Figures 5A and 6 are representative of two different types of seals, or membranes, 60, 160, that can be implemented as the seals 52, 54 in the bottle assembly 10. As shown, each seal 60, 160 is a circumferential seal, and again, each seal 60, 160 may be made of a resilient material.

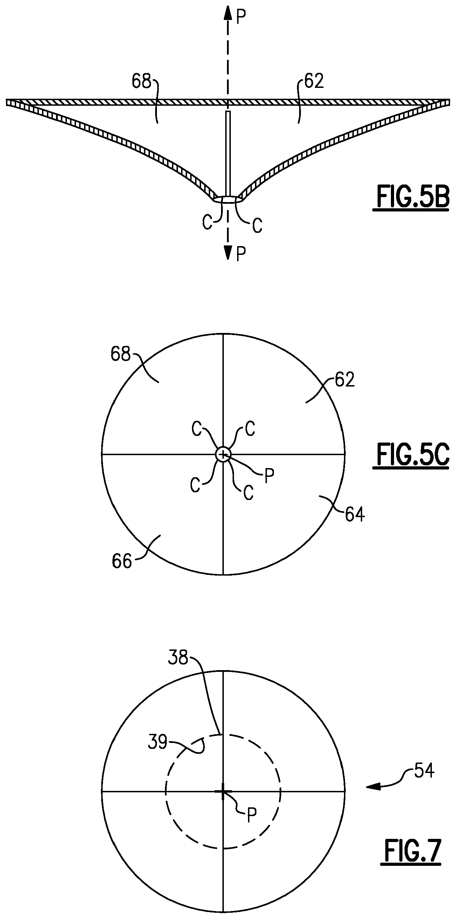

In Figure 5A, the seal 60 includes four flaps 62, 64, 66, 68. The flaps 862, 64, 66, 68 overlap one another at a centre point (e.g., shown as the path P) to further prevent entry of unwanted air beyond the threshold of the seal 60, and to thereby enclose the fluid reservoir FL. Preferably all four overlapping flaps 62, 64, 66, 68 include a cut-out C approximating a quarter circle such that the flaps can better seal about the cylindrical stick 24 and the brush 26, for example. When deflected by the stick 24 or brush 26, for example, the flaps 62, 64, 66, 68 align as generally shown in Figures 5B-5C. That is, the flaps 62, 64, 66, 68 generally form a conical shape (e.g., as seen in Figure 5B, which is a sectioned side view of the seal 60 as it is deflected to a downward position), and the cut-outs C form a generally circular opening about the path P (e.g., as seen in Figure 5C, which is a top view of the seal 60 as it is deflected to a downward position) to accommodate the stick 24 or brush 26, as discussed.

It should be understood that any number of flaps may be incorporated into the disclosed seal, although the figures show four flaps. Further, for the purposes of this disclosure, the term flap includes any opening in the seal, including a slit and/or any aperture which might allow part of the seal to deflect outwards when the applicator passes through. In one example, the fluid reservoir may include a first seal with four flaps, as well a second four-flap seal positioned directly above or below the first seal but rotated approximately 45° so that the slits of the two seals are not aligned. This doubling-up type of arrangement may allow for increased wiping, and can further prevent entry of unwanted air into the reservoir.

Another seal 160, shown in Figure 6, is similar to the seal 160 from Figures 5A-5C however its flaps 162, 164, 166 and 168 do not overlap, and they do not include cut-outs C. The flaps 162, 164, 166 and 168 do contact one another in the neutral position, however, as is generally shown in Figure 6, which sufficiently prevents the passage of air through the seal 160.

Figure 7 is a bottom view of the lower seal 54 and is representative of the relationship between the lower seal 54 and the tapered section 38. The inner diameter of the inner surface 39 of the tapered section 38 is preferably less than the diameter of lower seal 54, such that the tapered section 38 intersects the flaps of the lower seal 54 to block the deflection as the stick 24 or brush 26 passes through. The diameter of the inner surface 39 of the tapered section 38 is preferably larger than that of the brush 26, so as to avoid any wiping that may be caused by the tapered section 38.

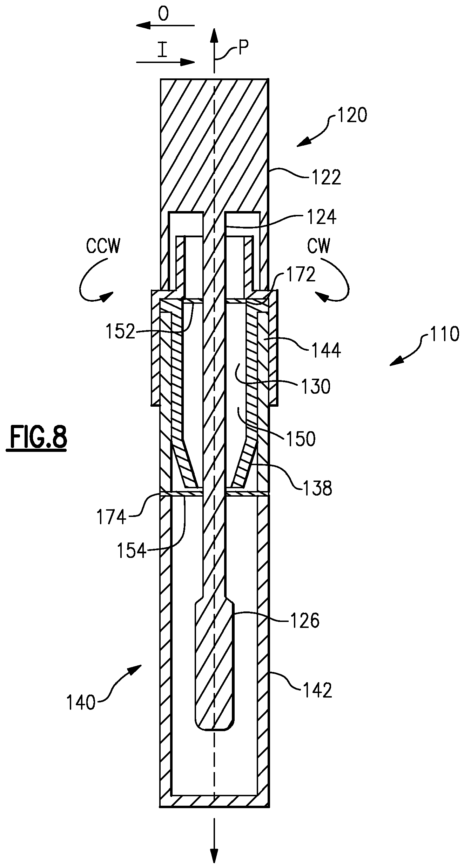

Figure 8 shows another disclosed bottle assembly 110. The bottle assembly 110 is substantially similar to the bottle assembly 10. To the extent not otherwise described or shown, the bottle assembly 110 includes parts corresponding to those shown in the bottle assembly 10 of Figure 1, having corresponding reference numerals prefixed with a "1." Notably, in the bottle assembly 110, the seals 152, 154 may be supported by supports 172, 174 that may be integrally formed in the upper housing section 130 and the lower housing section 140, respectively. In this manner, the need for the inwardly projecting flanges 35, 46 may be eliminated.

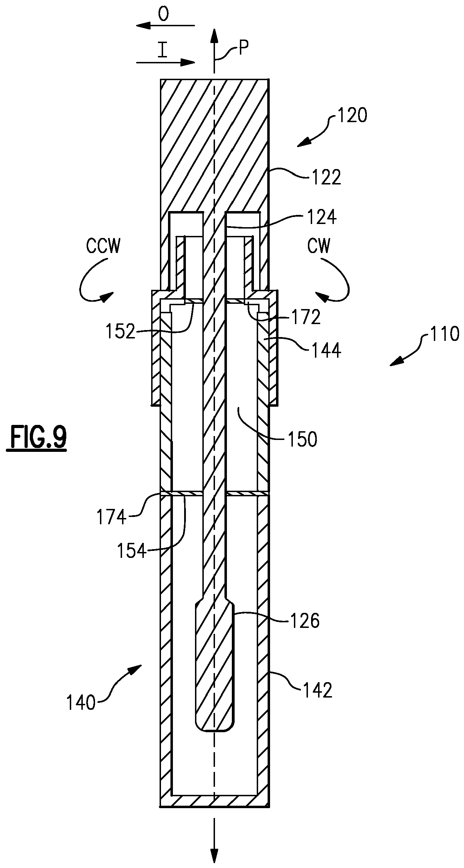

While the above-described blocking feature may be useful, the increased wiping control provided by the Figure 1 embodiment, say, may not be needed in all applications. For example, as represented in Figure 9, the bottle assembly 110 could exclude the upper housing section 130 and tapered section 138 of Figure 8, while still including an antechamber 150 defined between upper and lower seals 152, 154. In a further variation, which does not fall under the scope of the present invention, the antechamber 150 may not be needed, and a single seal may be sufficient, as represented in Figure 10. As shown, the single seal is the lower seal 154, however the single seal could be any single seal, including the upper seal 152. The embodiments of Figures 9-10 can include one or more pre-wipers, as noted above, and can further incorporate either of the seals 60, 160. Notably, while Figures 9-10 are drawn relative to Figure 8, these figures are representative of structural variations that can be incorporated into this entire disclosure, and in particular into the Figure 1 embodiment.

Although the different examples have the specific components shown in the illustrations, embodiments of this invention are not limited to those particular combinations. It is possible to use some of the components or features from one of the examples in combination with features or components from another one of the examples.

One of ordinary skill in this art would understand that the above-described embodiments are exemplary and non- limiting. That is, modifications of this disclosure would come within the scope of the claims. Accordingly, the following claims should be studied to determine their true scope and content.

## Claims

1. A fluid reservoir assembly, comprising:
a housing (110) including a reservoir (140), the reservoir (140) storing a cosmetic fluid;
an applicator assembly (120) comprising a cap (22) and a stick (124) or stem extending downwardly therefrom, the stick (124) or stem being insertable into the reservoir (140) along a path, the stick (124) or stem including, at an opposite end to the cap, an applicator (126) to carry the cosmetic fluid; and
an upper (152) and a lower seal (154) included within the housing (110) and enclosing the reservoir (140) when in a neutral position, wherein
an antechamber (150) is formed between the upper (152) and lower seals (154), each of the upper (152) and lower (154) seals including a plurality of flaps (162, 164, 166, 168) deflectable by the applicator assembly (120) to form an opening through the seal (152, 154), the seal (152, 154) being configured to return to the neutral position when the applicator assembly (120) is not in engagement with the seal (152, 154);
the seals (152, 154) being configured to tightly wrap around the stick (124) and the applicator (126) so that air is substantially prevented from entering the reservoir (43) when the applicator assembly (120) is inserted;
the flaps (162, 164, 166 and 168) contact one another in the neutral position, which sufficiently prevents the passage of air through the seals; and wherein
the seals are generally flat, or generally bow upwardly, when in the neutral position.

2. The fluid reservoir assembly of claim 1, wherein the distance between the upper (152) and lower seals (154) is greater than the axial length of the applicator (126) such that when traveling along the path, the applicator (126) only passes through one of the upper (152) and lower (154) seals at a time.

3. The fluid reservoir assembly of claim 1, wherein the applicator (126) is a brush.

4. The fluid reservoir assembly of any preceding claim, wherein the flaps (162, 164, 166, 168) overlap one another at a point along the path when the seal (152, 154) is in a neutral position.

5. The fluid reservoir assembly of any preceding claim, wherein the flaps (162, 164, 166, 168) include cut-outs (C) to accommodate the stick (124) when the stick (124) passes through the seal (152, 154).

6. The fluid reservoir assembly of any preceding claim, wherein the applicator (126) passes through both of the upper (152) and lower seals (154) upon insertion into the reservoir (140).

7. The fluid reservoir assembly of any preceding claim, wherein the applicator (126) passes through both of the upper (152) and lowers seals (154) upon being removed from the reservoir (140).

8. The fluid reservoir assembly of any preceding claim, wherein each of the upper (152) and lower seals (154) includes a plurality of flaps (162, 164, 166, 168), and wherein the flaps (162, 164, 166, 168) contact one another at a point along the path when the seal (152, 154) is in a neutral position to enclose the reservoir (140).

9. The fluid reservoir assembly of claim 1, wherein the seal (152, 154) is deflectable, and deflection of the seal (152, 154) is selectively blockable to control an amount of fluid wiped from the applicator (126) by the seal (152, 154).

10. The fluid reservoir assembly of claim 1, further including a pre-wiper (PW) positioned below the seal (154).

## Patentansprüche

1. Fluidbehälteranordnung, die Folgendes umfasst:
ein Gehäuse (110), das einen Behälter (140) umfasst, wobei der Behälter (140) ein Kosmetikfluid speichert;
eine Applikatoranordnung (120), umfassend einen Deckel (22) und einen Stab (124) oder Schaft, der sich davon nach unten erstreckt, wobei der Stab (124) oder Schaft entlang eines Pfads in den Behälter (140) eingeführt werden kann und der Stab (124) oder Schaft an einem dem Deckel entgegengesetzten Ende einen Applikator (126) zum Halten des Kosmetikfluids umfasst; und
eine obere (152) und eine untere Dichtung (154), die in dem Gehäuse (110) enthalten sind und den Behälter (140) einschließen, wenn sie sich in einer Neutralstellung befinden, wobei
eine Vorkammer (150) zwischen der oberen (152) und der unteren Dichtung (154) gebildet ist, die obere (152) und die untere (154) Dichtung jeweils eine Vielzahl von Klappen (162, 164, 166, 168) umfassen, die von der Applikatoranordnung (120) ausgelenkt werden können, um eine Öffnung durch die Dichtung (152, 154) zu bilden und die Dichtungen (152, 154) dazu konfiguriert sind, in die Neutralstellung zurückzukehren, wenn sich die Applikatoranordnung (120) nicht mit der Dichtung (152, 154) im Eingriff befindet;
die Dichtungen (152, 154) dazu konfiguriert sind, sich eng um den Stab (124) und den Applikator (126) zu legen, sodass Luft im Wesentlichen daran gehindert wird, in den Behälter (43) einzudringen, wenn die Applikatoranordnung (120) eingeführt ist;
die Klappen (162, 164, 166 und 168) in der Neutralstellung einander berühren, was das Hindurchgelangen von Luft durch die Dichtungen ausreichend verhindert; und wobei die Dichtungen allgemein flach sind oder allgemein nach oben gebogen sind, wenn sie sich in der Neutralstellung befinden.

2. Fluidbehälteranordnung nach Anspruch 1, wobei der Abstand zwischen der oberen (152) und der unteren Dichtung (154) größer ist als die axiale Länge des Applikators (126), sodass der Applikator (126), wenn er sich entlang des Pfads bewegt, zu einem Zeitpunkt nur durch eine von der oberen (152) und der unteren (154) Dichtung gelangt.

3. Fluidbehälteranordnung nach Anspruch 1, wobei es sich bei dem Applikator (126) um eine Bürste handelt.

4. Fluidbehälteranordnung nach einem der vorangehenden Ansprüche, wobei die Klappen (162, 164, 166, 168) einander an einer Stelle entlang des Pfads überlappen, wenn sich die Dichtung (152, 154) in einer Neutralstellung befindet.

5. Fluidbehälter nach einem der vorangehenden Ansprüche, wobei die Klappen (162, 164, 166, 168) Ausschnitte (C) umfassen, um den Stab (124) aufzunehmen, wenn der Stab (124) durch die Dichtung (152, 154) gelangt.

6. Fluidbehälteranordnung nach einem der vorangehenden Ansprüche, wobei der Applikator (126) durch beide von der oberen (152) und der unteren Dichtung (154) gelangt, wenn er in den Behälter (140) eingeführt wird.

7. Fluidbehälteranordnung nach einem der vorangehenden Ansprüche, wobei der Applikator (126) durch beide von der oberen (152) und der unteren Dichtung (154) gelangt, wenn er aus dem Behälter (140) entnommen wird.

8. Fluidbehälteranordnung nach einem der vorangehenden Ansprüche, wobei die obere (152) und die untere Dichtung (154) jeweils eine Vielzahl von Klappen (162, 164, 166, 168) umfassen und wobei die Klappen (162, 164, 166, 168) einander an einer Stelle des Pfads berühren, wenn sich die Dichtung (152, 154) in einer Neutralstellung befindet, um den Behälter (140) einzuschließen.

9. Fluidbehälteranordnung nach Anspruch 1, wobei die Dichtung (152, 154) auslenkbar ist und die Auslenkung der Dichtung (152, 154) selektiv sperrbar ist, um eine Menge an Fluid, die durch die Dichtung (152, 154) von dem Applikator (126) abgestreift wird, zu begrenzen.

10. Fluidbehälteranordnung nach Anspruch 1, weiter umfassend eine Vor-Abstreifvorrichtung (PW), die unter der Dichtung (154) positioniert ist.

## Revendications

1. Ensemble réservoir de fluide, comprenant :
un boîtier (110) comportant un réservoir (140), le réservoir (140) stockant un fluide cosmétique ;
un ensemble applicateur (120) comprenant un bouchon (22) et un bâton (124) ou une tige s'étendant vers le bas à partir de celui-ci, le bâton (124) ou la tige pouvant être inséré dans le réservoir (140) le long d'un chemin, le bâton (124) ou la tige comportant, à une extrémité opposée du bouchon, un applicateur (126) destiné à porter le fluide cosmétique ; et
un joint supérieur (152) et un joint inférieur (154) inclus dans le boîtier (110) et enfermant le réservoir (140) quand ils sont dans une position neutre, dans lequel une antichambre (150) est formée entre les joints supérieur (152) et inférieur (154), chacun des joints supérieur (152) et inférieur (154) comportant une pluralité de volets (162, 164, 166, 168) pouvant être inclinés par l'ensemble applicateur (120) pour former une ouverture à travers le joint (152, 154), le joint (152, 154) étant configuré pour revenir à la position neutre quand l'ensemble applicateur (120) n'est pas en prise avec le joint (152, 154) ;
les joints (152, 154) étant configurés pour s'enrouler intimement autour du bâton (124) et de l'applicateur (126) de telle sorte que l'air soit sensiblement empêché d'entrer dans le réservoir (43) quand l'ensemble applicateur (120) est inséré ;
les volets (162, 164, 166 et 168) font contact les uns avec les autres dans la position neutre, laquelle empêche suffisamment le passage d'air à travers les joints ; et dans lequel les joints sont généralement plats, ou généralement cintrés vers le haut, dans la position neutre.

2. Ensemble réservoir de fluide selon la revendication 1, dans lequel la distance entre les joints supérieur (152) et inférieur (154) est supérieure à la longueur axiale de l'applicateur (126) de telle sorte que lors du déplacement le long du chemin, l'applicateur (126) ne passe qu'à travers un seul joint supérieur (152) et inférieur (154) à la fois.

3. Ensemble réservoir de fluide selon la revendication 1, dans lequel l'applicateur (126) est une brosse.

4. Ensemble réservoir de fluide selon n'importe quelle revendication précédente, dans lequel les volets (162, 164, 166 et 168) se chevauchent les uns les autres au niveau d'un point le long du chemin quand le joint (152, 154) est dans une position neutre.

5. Ensemble réservoir de fluide selon n'importe quelle revendication précédente, dans lequel les volets (162, 164, 166, 168) comportent des découpes (C) destinées à recevoir le bâton (124) quand le bâton (124) passe à travers le joint (152, 154).

6. Ensemble réservoir de fluide selon n'importe quelle revendication précédente, dans lequel l'applicateur (126) passe à travers les deux joints supérieur (152) et inférieur (154) lors de son insertion dans le réservoir (140).

7. Ensemble réservoir de fluide selon n'importe quelle revendication précédente, dans lequel l'applicateur (126) passe à travers les deux joints supérieur (152) et inférieur (154) lors de son retrait du réservoir (140).

8. Ensemble réservoir de fluide selon n'importe quelle revendication précédente, dans lequel chacun des joints supérieur (152) et inférieur (154) comporte une pluralité de volets (162, 164, 166, 168), et dans lequel les volets (162, 164, 166, 168) font contact les uns avec les autres à un point le long du chemin quand le joint (152, 154) est dans une position neutre pour enfermer le réservoir (140).

9. Ensemble réservoir de fluide selon la revendication 1, dans lequel le joint (152, 154) est déformable, et la déformation du joint (152, 154) peut sélectivement être bloquée pour doser une quantité de fluide essuyée de l'applicateur (126) par le joint (152, 154).

10. Ensemble réservoir de fluide selon la revendication 1, comportant en outre une pré-raclette (PW) positionnée en dessous du joint (154).
